# EUROPEAN PATENT SPECIFICATION

(11) **EP 4 017 246 B1**
(45) Date of publication and mention of the grant of the patent: **19.06.2024**
(21) Application number: 20811778.8
(22) Date of filing: 11.11.2020
(51) Int. Cl.: A01C 1/08, A01G 7/04

(54) **METHOD FOR STERILIZATION OF CROPS**
VERFAHREN ZUR STERILISATION VON ERNTEGUT
PROCÉDÉ DE STÉRILISATION DE RÉCOLTES

(43) Date of publication of application: 29.06.2022
(73) Proprietor: INTERKORN SEMENARSTVO IN OBNOVLJIVI VIRI D.O.O., 9231 Beltinci (SI)
(72) Inventor: GSELMAN, Peter, 2000 Maribor (SI)
(74) Representative: Marn, Jure
(86) International application number: PCT/SI2020/050025
(87) International publication number: WO 2022/103341

(56) References cited:
- WO-A1-00/78124
- CN-A- 110 432 150
- KR-B1- 101 233 519
- RU-C2- 2 317 668
- US-A1- 2015 101 082

## Description

### Field of the Invention

The present invention relates to crops such as seeds, grains, nuts and beans and methods for sterilization using ecologically benign treatments. Of particular interest are crops that have been contaminated with spores of moulds, either during harvest or upon storage.

### Technical problem

Current sterilization of crops that have been contaminated with spores of moulds, either during harvest or upon storage uses treatment which may be dangerous to the environment.

### Background

Sterilization of different materials is obtained by various techniques, which can be grouped into three categories: 1 - heating, 2 - chemical methods, and 3 - physical methods (in particular irradiation with energetic particles). Some microorganisms are sensitive to elevated temperature so they can be inactivated at moderate temperatures, e.g. between 60 and 90 °C. Most microorganisms, however, are resistant to such temperatures so the treatment in the range between 60 and 90 °C should take hours what is impractical. A practical solution is autoclaving - heating at the temperature over 100 °C and elevated pressure. Such a treatment deactivates most microorganisms in a few minutes. Autoclaving is inappropriate for sterilization of grains due to high energy consumption and cooking effects - the seeds do not germinate after autoclaving. Chemical methods employ various gases or liquids for inactivation of microorganisms. They include ethylene oxide, ozone, chlorine and hydrogen peroxide. All these chemicals are reactive enough to cause inactivation of microorganisms at room temperature or even below. The chemicals are poisonous so the unreacted fraction of chemicals should be destroyed before sowing the seeds. If chemicals persist, they are ecologically harmful. The chemicals are aggressive, so they often cause irreversible modifications of materials to be sterilized. Chemical methods are as popular as autoclaving. For example, there are several 1000 patents on the application of hydrogen peroxide for sterilization of heat-sensitive objects.

Irradiation of materials with beams of energetic particles is also a popular method. Both electromagnetic radiation and electrons have been used for sterilization of heat-sensitive materials. The electromagnetic radiation includes soft and hard ultraviolet rays, X-rays and γ-rays. The penetration depth of electromagnetic radiation in organic materials depends on the wavelength. It is as low as few 10 nm at the wavelength of about 100 nm. With increasing wavelength, penetration depth also increases and is several µm in the germicidal zone, i.e. around 260 nm. The penetration depth also increases with decreasing wavelength from 100 nm down wise, in the range of X-rays and γ-rays. For γ-rays, for example, it is over 1 cm in organic material. The technique is useful for sterilization of smaller quantities of organic material since the energy of current sources of electromagnetic radiation is limited.

A combination of chemical and physical methods is provided by gaseous plasma. Gaseous plasma is a source of reactive chemical particles such as ozone, nascent oxygen and singlet oxygen. Furthermore, gaseous plasma is a source of ions and free electrons. These particles are chemically very reactive and interact abruptly with organic material, including germs. The penetration depth of reactive plasma particles is a few nm in organic material. Such a short penetration depth is a consequence of high chemical reactivity. Plasma is also a source of electromagnetic radiation in the range of wavelengths from about 100 nm to about 1000 nm. Germicidal effects are observed for radiation between about 200 and 300 nm. Gaseous plasma is, therefore, a very efficient tool for inactivation of germs on the surface of any material. Plasma is inefficient for inactivation of microorganisms that are inside the organic material. The reason is the poor penetration depth of radicals and rather weak radiation.

There is a shortage of methods for sterilization of seeds before sowing. Most chemical methods are either too aggressive or represent an ecological hazard. The chemicals may also influence the germination of seeds. Some inventors have used hydrogen peroxide to sterilize seeds, grains, nuts etc. The state-of-the-art in the field of seed sterilization by hydrogen peroxide is provided below.

JPS5581543 discloses a method for processing corn grains which can be stored for a long time at room temperature, and served only by opening the packaging, easily and economically, by treating corn grains with an aqueous solution containing hydrogen peroxide and glycine. Corn grains (raw, steamed, boiled or frozen) are immersed in an aqueous solution containing about 50-200 ppm of hydrogen peroxide and about 0.3-10% of glycine. After draining, the grains are packed in small packaging made of, polyethylene, polypropylene, or other materials, and sterilized by heating. Heating is useful since it increases the chemical interaction between peroxide and organic matter.

Treatment of grain powder made from corn, rice, mill, potatoes, etc. by hot steam at the temperature between 70 and 100 °C is disclosed in KR20120110559. In one embodiment, hydrogen peroxide is added to the water for better sterilization efficiency.

HUT61444 discloses a method for detoxification of grain fodder previously treated with Thiram fungicide. The grain is agitated for 5-15 minutes in an aqueous solution containing hydrogenperoxide or ozone, and/or a base as ammonia and/or an acid, such as acetic acid and/or an organic solvent such as ethanol. The detoxified grain is washed after agitation and dried for consumption.

Soaking corn seeds in hydrogen peroxide is disclosed in CN109463226. Mutated seeds are cleaned in warm water a few times, and then the corn seeds are put in a hydrogen peroxide solution with the mass concentration of 7-8% to be soaked for 6-8 minutes. The soaking causes sterilization. After soaking in 7-8% water solution of hydrogen peroxide, the seeds are rinsed with clear water and then exposed to sunlight for 2-4 hours. These methods enable stronger cold-resistant ability, according to CN109463226.

CN1 10432150 discloses a method which includes following steps: using running tap water to flush the seeds, disinfecting using a 75% alcohol-water solution for sterilization, using sterile water for flushing, using a 30% hydrogen peroxide solution for soaking, using a 10% hydrogen peroxide solution for soaking, using sterile water for flushing, and inoculating to a germination culture medium for dark culture.

CN107896962 discloses the processes of seed soaking, sand storage accelerating germination, matrix breeding and hydroponics. Seeds are soaked and washed with clear water and hydrogen peroxide, and then undergo sand storage accelerating germination in the sand. Within 25-30 days of seedlings, they are transplanted to a seedling cultivation matrix and finally transplanted to a water-containing nutrient solution. According to the method, hydrogen peroxide treatment and fine-sand storage accelerating germination are conducted on the seeds to speed up germination of the seeds and improve the germination rate.

A similar procedure is disclosed in CN107493732 for the case of rice seeds. The method comprises selecting undamaged seeds, drying the seeds until a water content is 12-14%, carrying out ultraviolet sterilization at 20 to 25 °C, soaking the aseptic seeds for several days, wherein the seed soaking solution comprises hydrogen peroxide with a concentration of 2-15% and potassium nitrate with a concentration of 0.01-0.07%, and then putting the seeds into a germinating agent for 15-25 hours. Finally, a bird-repelling agent is added onto the seeds having undergone germination acceleration.

CN106867715 relates to a grape seed extract used for silk fabric. The liquid sterilization disinfectant comprises the following components in parts by mass: 7-17 parts of a grape seed extract product, 7-17 parts of hydrogen peroxide, 0.7-1.7 parts of phenol, 0.1-0.3 parts of carboxymethylcellulose sodium, 7-17 parts of isopropanol, 2.5-17.5 parts of glycerin, 0.3-0.3 parts of epoxypropane, and 24-57 parts of water.

CN105612864 discloses a method for sterilization of rice seeds. The seeds are treated by trichloroisocyanuric acid or hydrogen peroxide. Then, they are soaked in water containing clay, talcum powder and calcium peroxide. The next step is soaking in a water solution of polyvinyl alcohol.

CN104886124 discloses a sugarcane seed soaking agent. The sugarcane seed soaking agent is prepared from 2-4% by weight of calcium chloride, 3-5% by weight of hydrogen peroxide, 5-15% by weight of diammonium phosphate, 10-20% by weight of potassium sulfate, 1-3% by weight of gibberellin, 1-3% by weight of chlorothalonil and 50-75% by weight of biogas slurry. Low concentration of hydrogen peroxide in water solution is disclosed in the prior art, except in CN1 10432150. The reason is the fact that a high concentration of hydrogen peroxide interacts chemically with seeds, thus causing weak or no germination at all. Furthermore, a high concentration of hydrogen peroxide in a water solution used for soaking seeds represents an ecological hazard: the chemical interaction between hydrogen peroxide and organic matter is exothermic. The temperature, therefore, increases with soaking time, and increased temperature causes more extensive chemical reactions, what in turn causes an even higher increase of the temperature until the control over the process is lost.

All disclosed methods employ treatment of seeds at ambient conditions, i.e. atmospheric pressure.

RU2317668 discloses a method involving exposing seeds to gas plasma in inorganic gas medium or inorganic gas mixture medium at frequency of electric charge ranging between 1 and 40 MHz, electric charge power of 0.01-0.1 W/cm³ and inorganic gas pressure ranging between 0.2 and 1.13 Tor during 10-45 s; treating seeds during 8-17 min with water preliminarily activated in at least one of electrode chambers of at least one diaphragm electrolyzer.

### Summary of the Invention

The present invention is defined by the appended claims.

Method for sterilization of crops solves above presented technical problem of sterilization of crops that have been contaminated with spores of moulds, either during harvest or upon storage uses treatment which may be dangerous to the environment by first briefly treating of the seeds with gaseous plasma containing reactive particles which cause hydrophilization of the seeds' surface to be followed by briefly soaking of said seeds in water-containing hydrogen peroxide. The pericarp is the outermost layer of seeds. It protects the seed from extensive water uptake. The pericarp is hydrophobic so liquid water cannot enter the inner parts of the seeds as long as they are in the phase of dormancy. Upon favourite conditions, i.e. temperature and humidity of the air in the pores of the pericarp, the dormancy is interrupted, and germination begins. These favourite conditions for germination are also beneficial for activation of mould spores. The germination of seeds, therefore, coincides with activation of the mould spores. The plant could be therefore contaminated with mould after germination what would lead to poor crops. The spores should be therefore inactivated before sowing. Spore inactivation is currently done by fungicides which are ecologically hazardous. The present disclosure provides methods for inactivation of spores during seeds' dormancy, with the methods being free from fungicides and ecologically friendly.

For purposes of these specifications, hydrophilization refers to procedure during which the matter is treated in such a way to improve the wettability, i.e. to enable liquids enter pores in a material.

In general sense, the present disclosure proposes the sterilization of seeds using a two-step procedure. In the first step, the seeds are briefly treated with gaseous plasma containing reactive particles which cause hydrophilization of the seeds' surface, in particular, the pericarp protecting the radicle and plumule, while in the second step, the seeds are briefly soaked in water-containing hydrogen peroxide. Both steps are accomplished in a short time, about a second. Such a treatment enables penetration of hydrogen peroxide into pores of the pericarp where it remains after removing the seeds from the water solution of hydrogen peroxide. The hydrogen peroxide captured within the pores of the pericarp will then slowly diffuse inside the seed, reach the radicle, plumule, coleoptile and coleorhiza, where the mould spores are most likely to be present. The diffusing hydrogen peroxide thus inactivates the spores inside the seed's structure. Such a treatment is useful since it consumes a small amount of hydrogen peroxide what is economical. Furthermore, the amount of hydrogen peroxide absorbed in the pericarp is so low that the treatment does not influence the germination ability. There is no risk of overtreatment since the soaking time is only about a second. The hydrogen peroxide is thus preferentially used for inactivation of mould spores rather than chemical degradation of the seeds.

The first embodiment provides a method for hydrophilization of the otherwise hydrophobic pericarp. The hydrophilization causes optimal conditions for absorption of a water solution of hydrogen peroxide within the pores of the pericarp protecting the radicle and plumule. The hydrophilization enables capillary effect providing the pores are almost free from any material including water and gases like air. In the preferred embodiment, the hydrophilization is accomplished upon vacuum conditions. Such conditions are preferred since the appropriate vacuum level enables rapid removal of any air or liquid water that might be present within the pores of pericarp protecting the radicle and plumule.

The second embodiment provides methods for penetration of water solution of hydrogen peroxide within the seed, in particular through the pericarp protecting the radicle and plumule as well as coleoptile and coleorhiza. It is assumed that the spores inside the seed are positioned predominantly between the pericarp, radicle and plumule. The pericarp protects the radicle and plumule as well as coleoptile and coleorhiza. The spores are well protected from external reagents because the untreated pericarp is hydrophobic, so any polar liquid such as water containing sterilizing agent cannot reach the spores in good time. The methods of the invention, therefore, represents a method for rapid interaction of spores within the seeds with hydrogen peroxide.

The third embodiment provides methods for minimization of the interaction between the hydrogen peroxide in a water solution with the major part of pericarp. It is assumed that the pericarp protecting the cotyledon is less porous than the pericarp protecting the radicle and plumule. Still, prolonged exposure of the pericarp protecting the cotyledon has a negative effect on germination ability. Since the methods assume a short contact of the seed with a liquid containing hydrogen peroxide, the pericarp protecting the cotyledon should not be affected much.

The fourth embodiment provides methods for minimization of the interaction between the hydrogen peroxide in a water solution with the endosperm. It is assumed that the endosperm is protected by aleurone layer which would be degraded only upon prolonged treatment with hydrogen peroxide. Still, prolonged exposure of the aleurone layer would harm germination ability. Since the methods assume a short contact of the seed with a liquid containing hydrogen peroxide, the aleurone layer should not be affected much.

The invention is therefore the method of sterilization of seed or plurality thereof comprising the following steps:
- exposing of said seed or plurality thereof to gaseous plasma for predetermined period of time, said gaseous plasma comprised of water vapour, said gaseous plasma causing hydrophilization of said seed or plurality thereof surface;
- soaking of said seed or plurality thereof in water-containing hydrogen peroxide for predetermined period of time, said water comprising hydrogen peroxide in concentration higher than 10% (w/w).

Preferably, the invention is also a method further comprising the following steps:
- arranging said seed or plurality thereof at predetermined temperature;
- exposing of said seed or plurality thereof to pressure corresponding to approximate water vapour saturation pressure for said predetermined temperature;

Preferably, the invention is also a method wherein said gaseous plasma further comprises other gases.

Preferably, the invention is also a method further comprising the following steps:
i. positioning said seed or plurality thereof into a treatment chamber;
ii. evacuating gas from said treatment chamber, thereby reducing the pressure in said treatment chamber to essentially saturated water pressure;
iii. applying an electrical discharge to form a gaseous plasma in said treatment chamber;
iv. soaking the said seed or plurality thereof in a water solution of hydrogen peroxide so that the pores within pericarp are filled with a water solution of hydrogen peroxide, preferably without breaking reduced pressure, preferably essentially vacuum, conditions employed during plasma treatment;
v. removing of said seed or plurality thereof from the water solution of hydrogen peroxide;
vi. letting hydrogen peroxide interact with spores inside the said seed or plurality thereof;
vii. venting said treatment chamber, thereby increasing the pressure inside the treatment chamber, preferably to ambient pressure;

Preferably, the invention is also a method wherein said predetermined temperature is between 5°C and 50°C, preferably between 10 and 30 °C, said method further comprising the following steps:
i. providing a treatment chamber, preferably a vacuum chamber, and positioning of said seed or plurality thereof within said treatment chamber;
ii. evacuating gas from said treatment chamber, thereby reducing the pressure in said treatment chamber to approximately saturated water pressure for said predetermined temperature;
iii. passing said seed or plurality thereof through the vacuum chamber in such a manner that said seed or plurality thereof first pass a segment of the vacuum chamber where gaseous plasma is created continuously, then said seed or plurality thereof pass the segment of the vacuum chamber where a container of water solution of hydrogen peroxide is mounted, said seed or plurality thereof being soaked in said water solution of hydrogen peroxide for a time of about a second, to be followed either by resting of said seed or plurality thereof in the third segment of said treatment chamber where the interaction of hydrogen peroxide inside the pores of pericarp occurs or by resting of said seed or plurality thereof in a separate chamber at any pressure.

Preferably, the invention is also a method wherein said pressure in said treatment chamber is below 100 mbar.

Preferably, the invention is also a method wherein said pressure in said treatment chamber is below 10 mbar.

Preferably, the invention is also a method wherein said gaseous plasma is created by means of electrical discharge.

Preferably, the invention is also a method wherein said gaseous plasma is further containing at least one gas in addition to water vapour, said gas chosen from the group comprising noble gas, oxygen, nitrogen, hydrogen, ammonia, carbon dioxide.

According to the invention, the concentration of hydrogen peroxide is higher than 10%, preferably about 30%.

Preferably, the invention is also a method wherein the soaking time is between 0.1 and 100 s, preferably between 0.3 and 30 s, most preferably between 1 and 3 s.

Preferably, the invention is also a method wherein the seeds are kept at the pressure equal or above the saturated vapour pressure more than 1 s, preferably more than 10 s, most preferably between 100 and 300 s.

Preferably, the invention is also a method wherein the temperature of the seeds during the treatments does not change for more than 50 °C, preferably not more than 5 °C.

Preferably, the invention is also a method wherein said seed or plurality thereof is chosen from the group containing wheat, spelt, corn, buckwheat, barley, oats.

Herein is also disclosed a device for sterilization of seed or plurality thereof for performing a method for sterilization of said seed or plurality thereof described above, and comprising:
i. a treatment chamber capable of providing of predetermined pressure and predetermined temperature;
ii. means for generating of gaseous plasma by means of electrical discharge, said gaseous plasma comprised of at least water vapour;
iii. means for soaking of said seed or plurality thereof for predetermined time in hydrogen peroxide.

### Summary of the Figures

Embodiments and experiments illustrating the principles of the invention will now be discussed with reference to the accompanying figures in which:

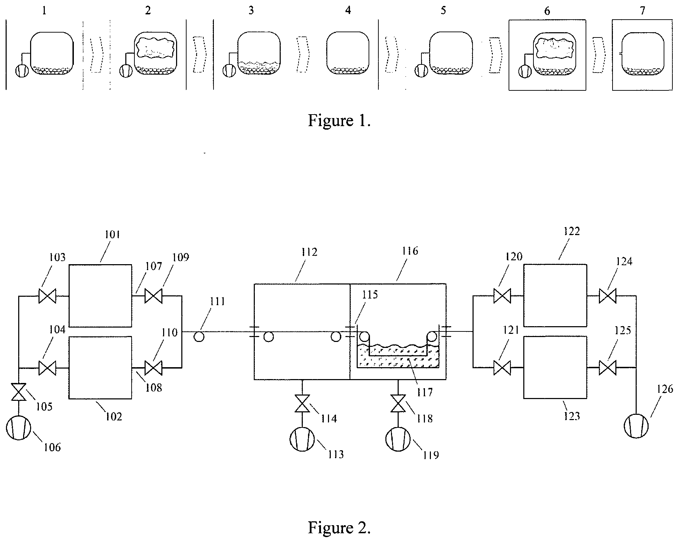

Figure 1 shows a schematic of an embodiment of the invention. Seeds are first evacuated close to the saturated water pressure 1 and then treated by gaseous plasma 2 to assume hydrophilic surface finish. Further, the seeds are soaked into a water solution of hydrogen peroxide 3 and removed from the water solution of hydrogen peroxide 3 so that the peroxide in the pores of the seeds' pericarp interacts 4 with organic material. Optionally, the seeds are evacuated to a pressure below the saturated water pressure to remove any excess water solution of hydrogen peroxide 5 and optionally treated by second plasma 6 to stimulate the destruction of any excess hydrogen peroxide, then vented to ambient pressure 7.
Figure 2 shows a schematic of a device useful for the treatment of seeds in the continuous mode. There are two containers for contaminated seeds - container 101 and container 102. The rough vacuum valves 103 and 104 enable connection of either or both containers 101 and 102 with a vacuum pump 106 which is equipped with a gate valve 105. The vacuum pump 106 is used to evacuate containers 101 and 102 to the pressure level close to the saturated water pressure at the temperature in containers 101 or 102. The containers 101 and 102 are equipped with transport belts 107 and 108 that enable transportation of contaminated seeds from the containers 101 and 102 through gate valves 109 and 110 to the main transport belt 111. The transport belt 111 enables the transport of contaminated seeds into the plasma chamber 112. The plasma chamber 112 may be pumped additionally with the pump 113 connected to the plasma chamber via a vacuum valve 114. After passing the plasma chamber 112, the transport belt with activated contaminated seeds passes a narrow segment 115 and enters the soaking chamber 116. There is a water solution of hydrogen peroxide 117 in the soaking chamber 116. The soaking chamber 116 may be additionally pumped with another pump 119 through another valve 118. The contaminated and plasma-activated seeds absorb minute quantities of water solution of hydrogen peroxide in the soaking chamber. The transport belt 111 with seeds containing hydrogen peroxide within the pores of pericarp continues the way through either valve 120 or 121, and thus transports seeds to the resting chambers 122 or 123. The hydrogen peroxide interacts with the spores within seeds in the resting chambers 122 or 123, which are both connected to another vacuum pump 126 through appropriate valves 124 and 125.

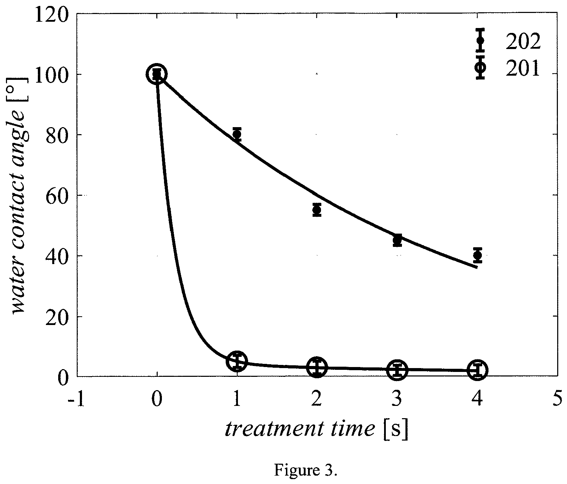

Figure 3 shows the contact angle of a droplet of 30% water solution of hydrogen peroxide just after its deposition on the surface versus the plasma treatment time. The initial value is for untreated corn seed. Curve 201 is for the droplet on the pericarp next to radicle (pedicel), curve 202 is for the pericarp on the hull. The pericarpt next to the radicle (curve 201) assumes a superhydrophilic surface finish (i.e. droplet contact angle immeasurably low) already after a second of plasma treatment, while the decrease of the contanct angle on the pericarpt on the hull (curve 202) is more gradual.

### Detailed Description of the Invention

Aspects and embodiments of the present invention will now be discussed with reference to the accompanying figures. Further aspects and embodiments will be apparent to those skilled in the art.

The present disclosure relates to methods of sterilising seeds, nuts, beans and similar agricultural products (thereafter: seeds). The seeds are often contaminated with viruses, bacteria or/and mould. Of particular importance are spores of various moulds. The spores may be on the surface or inside the seeds. The spores most likely proliferate upon appropriate conditions (usually high humidity) and negatively influence on the growth of the plant from the germination and formation of the sprout to ripening. The seeds should be sterilized before sowing to assure for the proper germination and seeding. Classical methods for seed sterilization employ pesticides which represent an ecological hazard. There are needs for developing sterilization techniques that are efficient for sterilization in the phase of seeds' dormancy and do not influence the environment. Such a technique is disclosed in this document.

The present disclosure relates to methods of sterilizing seeds based on the chemical interaction of hydrogen peroxide with the spores. Hydrogen peroxide is widely used for sterilization of different objects in medicine and pharmacy. The hydrogen peroxide is an efficient sterilizer in both liquid and gas phase. The hydrogen peroxide molecules can penetrate the cell wall of microorganisms and cause irreversible changes of the interior of the microorganism cells such as bacteria and mould. The irreversible changes in turn cause inactivation of the cells, i.e. inability to proliferate. Small doses of hydrogen peroxide are sufficient to inactivate bacterial and mould cells. As long as the cells are on the surface of a product, the inactivation is a rapid process; typically the treatment of a minute or less should sterilize the product. This effect was found beneficial in medicine where heat-sensitive products are routinely treated in the atmosphere rich in hydrogen peroxide.

The seeds are often contaminated with mould upon inadequate storage. The mould spores accumulate on the seed bran, where they are rather easily reached by hydrogen peroxide in the gas phase. Some spores, however, rest also inside the seeds. They typically enter the interior of a seed through the pericarp next to the radicle (the tip cap) where the pericarp is porous.

Furthermore, the seeds may be contaminated with mould already before harvesting, particularly in a humid climate. The hydrogen peroxide vapour can enter the seed's interior by diffusing through the pores in the pericarp. The diffusion is a relatively slow process, so the spores inside the seed are inactivated slowly, typically within several minutes or even hours. The slow diffusion limits the applicability of hydrogen peroxide for sterilization of seeds. Furthermore, the hydrogen peroxide does not only diffuse inside the seed but also chemically interacts with the seed. The result of extensive chemical interaction is the degradation of seeds, in particularly the outermost layer - the pericarp. Such extensive interaction occurs at prolonged exposure of the seeds to liquid or gaseous hydrogen peroxide. Besides degradation, chemical interaction causes depletion of the hydrogen peroxide as well. The chemical interaction thus prevents the application of hydrogen peroxide for sterilization of seeds by prolonged exposure.

Hydrogen peroxide is useful for inactivation of spores inside seeds providing it is delivered right where it is needed, i.e. in the radicle where the spores inside the seeds are most likely to be found. The present disclosure discloses methods for delivering hydrogen peroxide inside the seeds without significant degradation of the seed bran. The methods of delivering the appropriate dose of hydrogen peroxide to the appropriate place are disclosed in this document. According to the methods of the disclosure, the tip cap and the porous part of the pericarp next to the radicle, are soaked with a water solution of hydrogen peroxide without significant modification to the rest of the seed. This is achieved by an appropriate pre-treatment of the seeds before soaking the seeds in the water solution of hydrogen peroxide.

Polar liquids, like the water solution of hydrogen peroxide, do not enter pores in the pericarp. The inability of entering the pores is due to the hydrophobic character of the pericarp. Any polar liquid does not wet the pores but remains on the surface of the seed. The wetting is only possible if the surface finish of the seed is modified, i.e. transformed from hydrophobic to hydrophilic character. In one aspect of the disclosure, such a transformation from hydrophobic to hydrophilic character is provided. The transformation is achieved first by evacuation of the seeds (to remove the air inside the pores), second by treatment of the seeds with gaseous plasma (to form polar functional groups within the pores and thus increase the surface energy). Such a surface finish enables the capillary effect - the liquid enters the pores almost instantly and remains there providing the pressure inside the treatment chamber is at or above the vapour saturation pressure. The water vapour saturation pressure at 20 °C is about 23 mbar. As long as the pressure in the treatment chamber is kept at or above the water vapour saturation pressure, the liquid remains inside the pores.

The inactivation of spores inside the seeds is not an instant process even when the pores are filled with hydrogen peroxide. Not all spores are easily accessible, so it takes time to diffuse the hydrogen peroxide inside the seed. After wetting the pores with a water solution of hydrogen peroxide, the seeds are left to rest for several minutes to allow the hydrogen peroxide diffuse inside the seeds and inactivate the spores. During resting, lots of hydrogen peroxide diffuses inside the seed where it is consumed by chemical interaction with organic matter. Typically, the amount of hydrogen peroxide absorbed in spores is about appropriate to inactivate all the spores inside the seed and does not cause significant modification of other matter inside the seeds. Too-high doses of hydrogen peroxide would influence the seed's germination. The amount of hydrogen peroxide absorbed in pores of some types of seeds may be too large what affects the germination. In such cases, a fraction of the water solution of hydrogen peroxide inside the pores should be removed after soaking. According to the methods of the disclosure, such removal of the water solution of hydrogen peroxide inside the pores is achieved by a brief drop of the pressure inside the resting chamber below the saturated vapour pressure. For example, if the seed's temperature is 20 °C so that the saturated vapour pressure is about 23 mbar, the resting chamber is evacuated for few seconds below 20 mbar, preferably below 10 mbar to assure for almost instant removal of a fraction of water solution of hydrogen peroxide inside the pores.

Upon resting, almost all hydrogen peroxide, that has been stored in the pores, interacts chemically with the organic matter, so the seeds are almost free from hydrogen peroxide after resting. If for any reason, not all hydrogen peroxide is used for chemical reaction, further evacuation of the seeds below the saturated vapour pressure at a given temperature is beneficial. Additionally, a brief plasma treatment after resting may be applied to stimulate desorption of any remaining hydrogen peroxide before the seeds are ready for sowing or further treatment.

Embodiments of the methods of invention hence include the steps that are shown schematically in Figure 1. The contaminated seeds are first evacuated 1. The evacuation enables removal of gas from the vacuum chamber where seeds are placed. In particular, the evacuation also enables removal of air inside the pores of the pericarp. Preferably, the seeds are evacuated to the pressure close to the vapour saturation pressure. At 20 °C, the saturated vapour pressure is about 23 mbar, at 10 °C the saturated vapour pressure is about 12 mbar, and at 1 °C the saturated vapour pressure is about 6 mbar. Evacuation to pressure well below the saturated vapour pressure may be useful, but also leads to excessive evaporation and thus cooling the seeds what is not always acceptable. Namely, the seeds may freeze upon continuous pumping at the pressure well below the saturated vapour pressure what is regarded as an unwanted effect. Furthermore, the energy consumption for the vacuum pump may be too high if the pressure is kept well below the saturated vapour pressure for a prolonged time.

The second step, as shown schematically in Figure 1, is treatment by gaseous plasma 2. The gaseous plasma 2 is sustained preferably at the saturated vapour pressure, or at lower pressure. The gas upon treatment with gaseous plasma 2 may contain only water vapour, but in one aspect other gases are added, for example, oxygen or argon. Argon was found useful in some embodiments since it allows for better spreading of gaseous plasma 2. Oxygen was found useful in some embodiments since it allows for higher concentration of O-atoms which are supposed to change the surface properties from hydrophobic to hydrophilic. Any discharge may be useful for sustaining gaseous plasma 2, in particular a DC glow discharge, a pulsed DC glow discharge, a DBD discharge, an AC discharge, an RF discharge or an MW discharge. The discharge causes plasma conditions, thus dissociation of water molecules to OH radicals which were found useful for transforming the surface finish of the pericarp from hydrophobic to hydrophilic. Gaseous plasma 2 also contains free electrons and charged molecules and radicals, which was also found beneficial for the desired surface finish of the seeds.

The third step of the embodiment of the methods of the invention presented schematically in Figure 1 is soaking seeds in a water solution of hydrogen peroxide 3. Any concentration of hydrogen peroxide was found useful, but particularly the standard industrial solution of 30% hydrogen peroxide in water.

According to the invention, the water comprises hydrogen peroxide in a concentration higher than 10% (w/w).

The soaking of the seeds in a water solution of hydrogen peroxide 3 is preferably performed in a short time, preferably about 1 s. This time is useful since it is long enough to soak pores in pericarp with a water solution of hydrogen peroxide 3 but short enough to prevent significant chemical interaction of hydrogen peroxide with organic matter. The soaking of seeds in a water solution of hydrogen peroxide 3 is preferably performed at the pressure of the saturated vapour pressure or slightly elevated pressure, for example at 30 mbar at 25 °C. This was found beneficial since the much lower pressure would cause extensive evaporation of the liquid, what in turn would cause lower temperature of the liquid what was found an unwanted effect according to the methods of the disclosure.

The fourth step of the embodiment of the methods of the invention presented schematically in Figure 1 is resting the seeds that have been previously soaked in a water solution of hydrogen peroxide 3. The resting allows for diffusion of hydrogen peroxide inside the seeds, interacting 4 hydrogen peroxide with organic matter and thus inactivation of the spores. The interacting 4 is preferably performed at the pressure above the saturated vapour pressure what prevents loss of hydrogen peroxide by evaporation. The preferred interacting 4 period is several minutes. Such a time was found useful for appropriate diffusion of hydrogen peroxide inside the seeds. Prolonged resting times were not found to have any effect on the quality of the method disclosed in this document. Still, some types of seeds may soak too much liquid, so an additional step is useful.

If the quantity of liquid absorbed in step 3 of the methods of the invention shown schematically in Figure 1 is too large, additional steps may be useful. One such step may be evacuating the seeds below the saturated vapour pressure to remove any excess water solution of hydrogen peroxide 5. The excessive amount of soaking liquid may lead to unwanted chemical reactions of hydrogen peroxide with organic matter. The interacting 4 may be therefore terminated by evacuating the seeds below the saturated vapour pressure to remove any excess water solution of hydrogen peroxide 5. Step 5 is optional, i.e. applicable only if the amount of soaking liquid in step 3 is too high.

Yet another optional step is a brief treatment of rested seeds with the second gaseous plasma 6. This step is useful only if there is excessive hydrogen peroxide left on the treated seeds. The treatment with the second gaseous plasma 6 enables stimulated desorption of hydrogen peroxide from the surfaces and destruction of hydrogen peroxide to water and oxygen upon mild plasma conditions. Any discharge may be useful for sustaining gaseous plasma 6, in particular a DC glow discharge, a pulsed DC glow discharge, a DBD discharge, an AC discharge, an RF discharge or an MW discharge.

Whether the steps 5 or 6 were used or not, the final step according to the methods of the embodiment of the invention is venting 7 the seeds to ambient conditions, i.e. atmospheric pressure. The seeds treated according to steps 1-4, optionally 1-5, optionally 1-6, are sterile. In a highly improbable event that tests show insufficient sterilization, steps 1-4 may be repeated.

In one preferred embodiment, the methods are employed in the continuous mode. The contaminated seeds enter a device that employs at least steps 1-4 of Figure 1. In some embodiments, the contaminated seeds enter a device that employs the steps 1-5 or even 1-6 of Figure 1. The treatment, according to the methods in the continuous mode, is shown schematically in Figure 2. Figure 2 represents the steps 1-4 of an embodiment of the invention. All containers in Figure 2, i.e. 101, 102, 112, 116, 122 and 123, are hermetically tight. The contaminated seeds are poured into the containers 101 or 102. The vacuum pumps 106, 113, 119 and 123 are switched on during the treatment. The vacuum pumps 106, 113, 119 and 123 ensure for achieving the vacuum level at least equal to the saturated vapour pressure. In other words, the ultimate pressure of the vacuum pumps 106, 113, 119 and 123 is below the saturated vapour pressure.

The container 101 is evacuated (by opening the valves 103 and 105) to the vacuum level equal to the saturated vapour pressure. The valve 104 remains closed. Once the saturated vapour pressure is achieved in container 101 (typically within a minute), the valve 103 is closed, and the valve 109 is opened so that the seeds are slowly and continuously transferred from the container 101 to the main transport belt 111 using the transport belt 107. The transport belt 111 transports the seeds into the plasma chamber 112. The plasma chamber 112 may be additionally pumped by the vacuum pump 113 through the valve 114 to keep the pressure inside the plasma chamber below the saturated vapour pressure. The seeds move through the plasma chamber 12, where they are treated by gaseous plasma. The seeds on the transport belt 111 then exit the plasma chamber 112 and enter the soaking chamber 116 through a narrow segment 115. The soaking chamber 116 may be pumped with the vacuum pump 119 through the valve 118. The valve 118 may have adjustable throughput so that the vacuum level inside the soaking chamber 116 is kept at the saturated vapour pressure at all times, independently from the desorption of the seeds or desorption from the water solution of hydrogen peroxide 117. The vacuum level in the soaking chamber 116 is preferably kept at the saturated vapour pressure by adjusting the throughput of the valve 118. The vacuum level inside the plasma chamber 112 may be lower than in the soaking chamber 116. This is assured by pumping the plasma chamber 112 independently from the soaking chamber 116. The pressure difference is sustained by the appropriate design of the narrow segment 115, which preferably has a low gas throughput. The pumping speed of the pump 113 may be much higher than the pumping speed of the other pumps 106, 119 and 126. The ultimate pressure of the pump 113 may be well below the saturated vapour pressure, preferably below 10 mbar, most preferably below 1 mbar. The soaking chamber 116 is equipped with a container containing water solution of hydrogen peroxide 117. The water solution of hydrogen peroxide 117 is preferably poured into the soaking chamber 116 continuously so that the level of water solution of hydrogen peroxide 117 is kept constant. The pump 119 assures for keeping the vacuum level inside the soaking chamber 116 constant so that any vapour arising from the evaporation of a part of the water solution of hydrogen peroxide 117 is removed continuously. Such removal of excessive vapour was found useful in the methods of the disclosure since rather intensive evaporation was observed upon soaking the seeds in a water solution of hydrogen peroxide 117. The seeds move through the water solution of hydrogen peroxide 117 on the transport belt 111 and remain soaked for a specific time which depends on the speed of the transport belt 111 and the length of the container containing water solution of hydrogen peroxide 117. In preferred embodiments, the soaking time is between 0.1 and 100 s, most preferably between 1 and 3 s. Such a treatment time was found useful for absorption of water solution of hydrogen peroxide 117 into the pores of the pericarp. After soaking in the water solution of hydrogen peroxide 117, the valve 120 is opened so that the seeds move to the resting chamber 122 where they accumulate until the resting chamber 122 is almost full. The vacuum level remains at about saturated vapour pressure on the way between the soaking chamber 116 and resting chamber 122. The seeds rest in the resting chamber 112, so the absorbed hydrogen peroxide from the container containing water solution of hydrogen peroxide 117 diffuses inside the seeds where it interacts with organic matter and thus causes inactivation of mould spores.

Once almost all seeds from the container 101 have been transported by the transport belt 107, the valves 103 and 109 close and the valves 104 and 110 open. The transport belt 108 assures for slow and continuous transport of the seeds to the main transport belt 111 and further on. During the transportation of the seeds from the container 102, the container 101 is refilled with contaminated seeds. When a good portion of seeds has been removed from the container 102, the valve 104 is closed, and the valve 103 opens so that the vacuum level in the container 101 is approximately the saturated vapour pressure before the container 102 is empty. The seeds from container 102 keep moving on the main transport belt 111, through the plasma chamber 112 and soaking chamber 116, into the resting chamber 123; same as disclosed in the previous paragraph. All seeds starting from the container 102 are finally accumulated in resting chamber 123. Resting of seeds in the resting chambers enables interaction of the hydrogen peroxide with organic matter inside the seeds and thus inactivation of mould spores. After completing the resting time and the valves 124 or 125 are closed, the containers 122 or 123 are vented with sterile air and the sterile seeds removed. After removal of the seeds, the containers 122 or 123 are evacuated by the pump 126 through the valves 124 or 125 and are thus ready to receive fresh seeds from the soaking chamber 116. The methods of the disclosure, therefore, assure for continuous treatment of seeds. During the removal period of seeds from the container 101, the container 102 is filled with new original (untreated) seeds. As soon as the container 101 is practically empty (some seeds always remain, but the quantity is marginal), the container 102 already assumes the vacuum level of the saturated vapour pressure, so removal of seeds for the container 102 begins as soon as the container 101 is practically empty.

The preferable pace is such that the time needed for removal of the seeds from each of the containers 101 or 102 is the same as the resting time of seeds in the resting chambers 122 or 123.

The duration of plasma treatment time and the soaking time is adjusted by adjusting the length of the plasma chamber 112 and the length of the container containing water solution of hydrogen peroxide 117. In one experiment, the rate of seeds removed from either container 101 or 102 was 1 kg/s. Corn seeds were used. The containers 101 and 102 had a capacity of 200 kg seeds each, meaning that the seeds were therefore removed from each of the containers 101 or 102 in 200 s. That was also the resting time of seeds in either resting chamber 122 or 123. The resting time of 200 s ensured that almost all hydrogen peroxide was absorbed by the seeds passing the soaking chamber 116 and interacted with the organic matter upon resting of seeds in the resting chamber 122 or 123. In the same experiment, the width of the transport belt 111 was 1 m, and the length of the plasma chamber 112 was 2 m. The seeds were poured onto the transport belt 111 so that they formed about a monolayer on the surface of the transport belt 111. The plasma treatment time was, therefore, about 1 s. The soaking chamber 116 had the same dimensions as the plasma chamber 112 so the soaking time was the same, i.e. about 1 s. The transport belt 111 was a mesh, thus allowing the seeds to be treated rather uniformly over the entire surface.

Figure 3 shows the contact angle of a droplet of 30% water solution of hydrogen peroxide on the surface versus the plasma treatment time. The initial value of about 100° is for untreated corn seed, indicating the hydrophobic character of both the pericarp on the hull and the radicle. Curve 201 is for the droplet on the pericarp next to the radicle (pedicel), curve 202 is for the pericarp on the hull. The droplet contact angle decreases slowly on the hull, but rapidly on the pericarp next to the radicle. The fast decreasing of the droplet angle on the pericarp next to the radicle indicates quick hydrophilization. The hull remains moderately hydrophilic even for prolonged treatment time.

The concentration of hydrogen peroxide of 30% was found particularly beneficial. It is low-cost industrial-grade hydrogen peroxide. The methods of disclosure were also found feasible with a lower concentration of hydrogen peroxide, but incomplete sterilization was observed at concentrations below about 3% using the 1 s plasma and soaking treatment times.

According to the invention, the water comprises hydrogen peroxide in a concentration higher than 10% (w/w).

It shall be understood that the information provided above is just exemplary. The configuration of the useful embodiment provided in Figure 2 may be modified, but the treating steps as in Figure 1 remain the same. For example, the soaking chamber 116 may be mounted above or below the plasma chamber 112 and not next to it, as shown in Figure 2.

In another preferred embodiment, the seeds are treated according to steps 1 and 2 of Figure 1, and then exposed to ambient atmosphere, and then the step 3 of Figure 1 is performed at ambient atmosphere. In this embodiment, the step 4 of Figure 1 is performed either at ambient conditions or upon vacuum conditions. The step 5 of Figure 1 is also performed at any pressure. The steps 5 and 6 of Figure 1 may be performed optionally. The advantage of this embodiment is simplification of the procedure since the soaking of the seeds in the water solution of hydrogen peroxide is not performed upon vacuum conditions. The drawback of this embodiment may be the hydrophobic recovery of the seeds. It is known that superhydrophilic surface finish as demonstrated in Figure 3, is not permanent but hydrophobic recovery of any plasma-treated organic material occurs spontaneously. The hydrophobic recovery is often accelerated at higher pressures and higher temperatures. The step 3 of Figure 1 should be therefore performed soon enough after accomplishing the step 2 of Figure 1 if this embodiment is applied for treatment of the contaminated seeds. The ability of sustaining the original concentration of hydrogen peroxide in water solution upon soaking the plasma-treated seeds may represent a technological challenge in this embodiment. Namely, the composition of the hydrogen peroxide in water may change with time since the hydrogen peroxide interacts chemically with the organic material and water does not. The step 5 of Figure 1 may be particularly useful in this embodiment. Hence, in this embodiment, the contaminated seeds are first evacuated, then treated by gaseous plasma, then exposed to air, then soaked in (or rinsed with) water solution of hydrogen peroxide, then drained by any method including exposure to a vacuum below the saturated water pressure, then leaving the hydrogen peroxide interact with the mould inside the seeds.

Nevertheless, another embodiment employs atmospheric-pressure plasma or sub-atmospheric pressure plasma for making the originally hydrophobic surface of the seeds hydrophilic. The advantage of this embodiment is further simplification since the vacuum system is not needed at all. The disadvantage is the difficulty of making uniform treatment of all seeds. Hence, in this embodiment, the contaminated seeds are first treated by atmospheric pressure gaseous plasma, then soaked in (or rinsed with) water solution of hydrogen peroxide, drained by any method including exposure to a vacuum below the saturated water pressure, and at the end leaving the hydrogen peroxide to interact with the mould inside the seeds.

It shall be understood that the vacuum pumps 106, 113, 119, 126 and valves 105, 114, 118, 124 and 125 enable evacuation of vacuum chambers 101, 102, 112, 116, 122 and 123 to different vacuum levels. The vacuum levels, where stated, only represent the preferred embodiments. For example, the vacuum levels in the plasma chamber 112 may be below the water-saturated pressure. The vacuum levels in vacuum chambers 101, 102, 112, 122 and 123 may be above the water-saturated pressure. The exemplary preferred vacuum levels indicate optimal conditions according to the methods of the disclosure. Vacuum levels below the saturated vapour pressure can cause evaporation and thus additional power needed to sustain selected vacuum levels. Furthermore, the vacuum levels below the saturated vapour pressure can cause cooling of the seeds, which may eventually lead to freezing what was found inadequate in some experiments. The vacuum level below the saturated vapour pressure in the plasma chamber 112 may be beneficial since more uniform plasma can be sustained at vacuum levels below the saturated vapour pressure. Preferably, vacuum pump 113 enables pumping the plasma chamber below the saturated vapour pressure.

The residual atmosphere contains vapours of water and hydrogen peroxide. Also, oxygen or argon may be introduced into the plasma chamber 112. The addition of argon was found beneficial for better uniformity of gaseous plasma in the plasma chamber 112. In one experiment, the vapour pressure in the plasma chamber 112 was kept at about 1 mbar, and argon was leaked during continuous pumping using the vacuum pump 113 so that the total pressure was about 5 mbar. Such a gas composition in the plasma reactor was found beneficial in terms of plasma uniformity and thus equal treatment of all seeds on the transport belt 111.

The vacuum level below the saturated vapour pressure in the soaking chamber 116 causes extensive evaporation of water solution of hydrogen peroxide 117 in the soaking chamber 116. The effect is not detrimental for the methods of the disclosure but would lead to increased consumption of hydrogen peroxide, what was found inappropriate at our experiments.

In the cases of highly contaminated seeds, the procedure shown in Figure 1 may be repeated once or even twice. The seeds that have been resting in the resting chambers 122 or 123 may be transferred back into the containers 101 or 102 and the whole procedure repeated.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of invention as defined by the appended claims.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" shall be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about" or "approximately", it will be understood that the particular value forms another embodiment. The term "about" and "approximately" in relation to a numerical value is optional and means, for example, ±10%.

The present disclosure in one of the embodiments therefore relates to methods for sterilization of seeds at ambient temperature. The seeds are first evacuated to low pressure, preferably to the vacuum level about approximately the water-saturated vapour pressure and then treated by gaseous plasma at the pressure close the water-saturated vapour pressure in an atmosphere containing water vapour. Further on, the seeds are briefly soaked in the water solution of hydrogen peroxide, removed from the water solution of hydrogen peroxide and put to rest at the pressure equal or higher than water saturation vapour pressure. The treatment by gaseous plasma causes modification of seeds' wettability, so the seeds treated by gaseous plasma are capable of absorbing a small amount of water solution of hydrogen peroxide within the pores of the pericarp. The absorption of the water solution of hydrogen peroxide is preferably accomplished at the pressure close to the water-saturated vapour pressure. The soaking time is short, preferably 1-3 s, to prevent significant degradation of seeds and keep the consumption of the water solution of hydrogen peroxide low.

## Claims

1. A method of sterilization of seed or plurality thereof comprising the following steps:
- exposing of said seed or plurality thereof to gaseous plasma for predetermined period of time, said gaseous plasma comprised of water vapor, said gaseous plasma causing hydrophilization of said seed or plurality thereof surface;
- soaking of said plasma-treated seed or plurality thereof in water predetermined period of time, **characterised by** said water comprising hydrogen peroxide in concentration higher than 10% (w/w).

2. A method according to claim 1 further comprising the following steps:
- arranging said seed or plurality thereof at predetermined temperature;
- exposing of said seed or plurality thereof to pressure corresponding to approximate water vapour saturation pressure for said predetermined temperature;

3. A method according to any of previous claims wherein said gaseous plasma further comprises other gases.

4. A method according to any of previous claims further comprising the following steps:
i. positioning said seed or plurality thereof into a treatment chamber;
ii. evacuating gas from said treatment chamber, thereby reducing the pressure in said treatment chamber to essentially saturated water pressure;
iii. applying an electrical discharge to form a gaseous plasma in said treatment chamber;
iv. soaking the said seed or plurality thereof in a water solution of hydrogen peroxide so that the pores within pericarp are filled with a water solution of hydrogen peroxide, preferably without breaking reduced pressure, preferably essentially vacuum, conditions employed during plasma treatment;
v. removing of said seed or plurality thereof from the water solution of hydrogen peroxide;
vi. letting hydrogen peroxide interact with spores inside the said seed or plurality thereof;
vii. venting said treatment chamber, thereby increasing the pressure inside the treatment chamber, preferably to ambient pressure.

5. A method according to any of previous claims wherein said predetermined temperature is between 5°C and 50°C, preferably between 10°C and 30°C, said method further comprising the following steps:
i. providing a treatment chamber, preferably a vacuum chamber, and positioning of said seed or plurality thereof within said treatment chamber;
ii. evacuating gas from said treatment chamber, thereby reducing the pressure in said treatment chamber to approximately saturated water pressure for said predetermined temperature;
iii. passing said seed or plurality thereof through the vacuum chamber in such a manner that said seed or plurality thereof first pass a segment of the vacuum chamber where gaseous plasma is created continuously, then said seed or plurality thereof pass the segment of the vacuum chamber where a container of water solution of hydrogen peroxide is mounted, said seed or plurality thereof being soaked in said water solution of hydrogen peroxide for a time of about a second, to be followed either by resting of said seed or plurality thereof in the third segment of said treatment chamber where the interaction of hydrogen peroxide inside the pores of pericarp occurs or by resting of said seed or plurality thereof in a separate chamber at any pressure.

6. A method according to any of previous claims wherein said pressure in said treatment chamber is below 100 mbar.

7. A method according to any of previous claims wherein said pressure in said treatment chamber is below 10 mbar.

8. A method according to any of previous claims wherein said gaseous plasma is created by means of electrical discharge.

9. A method according to any of previous claims wherein said gaseous plasma is further containing at least one gas in addition to water vapour, said gas chosen from the group comprising noble gas, oxygen, nitrogen, hydrogen, ammonia, carbon dioxide.

10. A method according to any of previous claims wherein the concentration of hydrogen peroxide is about 30% (w/w)

11. A method according to any of previous claims wherein the soaking time is between 0.1 and 100 s, preferably between 0.3 and 30 s, more preferably between 1 and 3 s.

12. A method according to any of previous claims wherein the seeds are kept at the pressure equal or above the saturated vapour pressure more than 1 s, preferably more than 10 s, most preferably between 100 and 300 s.

13. A method according to any of previous claims wherein the temperature of the seeds during the treatments does not change for more than 50 °C, preferably not more than 5 °C.

14. A method according to any of previous claims wherein said seed or plurality thereof is chosen from the group containing wheat, spelt, corn, buckwheat, barley, oats.

## Patentansprüche

1. Verfahren zur Sterilisation eines Samens oder einer Vielzahl davon, umfassend die folgenden Schritte:
- Aussetzen des Samens oder der Vielzahl davon gegenüber gasförmigem Plasma für einen vorbestimmten Zeitraum, wobei das gasförmige Plasma aus Wasserdampf besteht, wobei das gasförmige Plasma eine Hydrophilisierung der Oberfläche des Samens oder der Vielzahl davon bewirkt;
- Einweichen des plasmabehandelten Samens oder der Vielzahl davon in Wasser für einen vorbestimmten Zeitraum, **dadurch gekennzeichnet, dass** das Wasser Wasserstoffperoxid in einer Konzentration von mehr als 10% (Gew./Gew.) umfasst.

2. Verfahren nach Anspruch 1, ferner umfassend die folgenden Schritte:
- Anordnen des Samens oder der Vielzahl davon bei einer vorbestimmten Temperatur;
- Aussetzen des Samens oder der Vielzahl davon gegenüber einem Druck, der ungefähr dem Wasserdampfsättigungsdruck für die vorbestimmte Temperatur entspricht.

3. Verfahren nach einem der vorhergehenden Ansprüche, wobei das gasförmige Plasma ferner andere Gase umfasst.

4. Verfahren nach einem der vorhergehenden Ansprüche, ferner umfassend die folgenden Schritte:
i. Positionieren des Samens oder der Vielzahl davon in einer Behandlungskammer;
ii. Evakuieren von Gas aus der Behandlungskammer, wodurch der Druck in der Behandlungskammer auf im Wesentlichen gesättigten Wasserdruck reduziert wird;
iii. Anlegen einer elektrischen Entladung, um in der Behandlungskammer ein gasförmiges Plasma zu bilden;
iv. Einweichen des Samens oder der Vielzahl davon in einer wässrigen Lösung von Wasserstoffperoxid, sodass die Poren innerhalb der Fruchtwand mit einer wässrigen Lösung von Wasserstoffperoxid gefüllt sind, bevorzugt ohne die während der Plasmabehandlung eingesetzten Bedingungen unter reduziertem Druck, bevorzugt im Wesentlichen Vakuum, zu unterbrechen;
v. Entfernen des Samens oder der Vielzahl davon aus der wässrigen Lösung von Wasserstoffperoxid;
vi. Zulassen einer Wechselwirkung von Wasserstoffperoxid mit Sporen im Inneren des Samens oder der Vielzahl davon;
vii. Belüften der Behandlungskammer, wodurch der Druck im Inneren der Behandlungskammer, bevorzugt auf Umgebungsdruck, erhöht wird.

5. Verfahren nach einem der vorhergehenden Ansprüche, wobei die vorbestimmte Temperatur zwischen 5°C und 50°C, bevorzugt zwischen 10°C und 30°C, beträgt, wobei das Verfahren ferner die folgenden Schritte umfasst:
i. Bereitstellen einer Behandlungskammer, bevorzugt einer Vakuumkammer, und Positionieren des Samens oder der Vielzahl davon innerhalb der Behandlungskammer;
ii. Evakuieren von Gas aus der Behandlungskammer, wodurch der Druck in der Behandlungskammer auf ungefähr gesättigten Wasserdruck für die vorbestimmte Temperatur reduziert wird;
iii. Leiten des Samens oder der Vielzahl davon durch die Vakuumkammer auf derartige Weise, dass der Samen oder die Vielzahl davon zuerst ein Segment der Vakuumkammer durchläuft, in dem kontinuierlich gasförmiges Plasma erzeugt wird, dann der Samen oder die Vielzahl davon das Segment der Vakuumkammer durchläuft, in dem ein Behälter mit einer wässrigen Lösung von Wasserstoffperoxid montiert ist, wobei der Samen oder die Vielzahl davon in der wässrigen Lösung von Wasserstoffperoxid für eine Zeit von etwa einer Sekunde eingeweicht wird, worauf entweder Ruhen des Samens oder der Vielzahl davon in dem dritten Segment der Behandlungskammer, in dem die Wechselwirkung von Wasserstoffperoxid im Inneren der Poren der Fruchtwand stattfindet, oder Ruhen des Samens oder der Vielzahl davon in einer separaten Kammer bei beliebigem Druck folgt.

6. Verfahren nach einem der vorhergehenden Ansprüche, wobei der Druck in der Behandlungskammer unter 100 mbar liegt.

7. Verfahren nach einem der vorhergehenden Ansprüche, wobei der Druck in der Behandlungskammer unter 10 mbar liegt.

8. Verfahren nach einem der vorhergehenden Ansprüche, wobei das gasförmige Plasma mittels elektrischer Entladung erzeugt wird.

9. Verfahren nach einem der vorhergehenden Ansprüche, wobei das gasförmige Plasma ferner mindestens ein Gas zusätzlich zu Wasserdampf enthält, wobei das Gas aus der Gruppe gewählt ist, umfassend Edelgas, Sauerstoff, Stickstoff, Wasserstoff, Ammoniak, Kohlenstoffdioxid.

10. Verfahren nach einem der vorhergehenden Ansprüche, wobei die Konzentration von Wasserstoffperoxid etwa 30% (Gew./Gew.) beträgt.

11. Verfahren nach einem der vorhergehenden Ansprüche, wobei die Einweichzeit zwischen 0,1 und 100 s, bevorzugt zwischen 0,3 und 30 s, stärker bevorzugt zwischen 1 und 3 s, beträgt.

12. Verfahren nach einem der vorhergehenden Ansprüche, wobei die Samen länger als 1 s, bevorzugt länger als 10 s, am stärksten bevorzugt zwischen 100 und 300 s, bei dem Druck gehalten werden, der gleich dem gesättigten Dampfdruck ist oder darüber liegt.

13. Verfahren nach einem der vorhergehenden Ansprüche, wobei sich die Temperatur der Samen während der Behandlungen um nicht mehr als 50°C, bevorzugt nicht mehr als 5°C, ändert.

14. Verfahren nach einem der vorhergehenden Ansprüche, wobei der Samen oder die Vielzahl davon aus der Gruppe gewählt ist, enthaltend Weizen, Dinkel, Mais, Buchweizen, Gerste, Hafer.

## Revendications

1. Procédé de stérilisation de graines ou d'une pluralité de celles-ci comprenant les étapes suivantes :
- exposition desdites graines ou de ladite pluralité de celles-ci à un plasma gazeux pendant une période de temps prédéterminée, ledit plasma gazeux étant constitué de vapeur d'eau, ledit plasma gazeux provoquant l'hydrophilisation de la surface desdites graines ou de ladite pluralité de celles-ci ;
- trempage desdites graines ou de ladite pluralité de celles-ci traitées au plasma dans de l'eau pendant une période de temps prédéterminée, **caractérisé en ce que** ladite eau comprend du peroxyde d'hydrogène en concentration supérieure à 10 % (p/p).

2. Procédé selon la revendication 1, comprenant en outre l'étape suivante :
- agencement desdites graines ou de ladite pluralité de celles-ci à une température prédéterminée ;
- exposition desdites graines ou de ladite pluralité de celles-ci à une pression correspondant à une pression approximative de saturation de vapeur d'eau pour ladite température prédéterminée.

3. Procédé selon l'une quelconque des revendications précédentes, dans lequel ledit plasma gazeux comprend en outre d'autres gaz.

4. Procédé selon l'une quelconque des revendications précédentes, comprenant en outre les étapes suivantes :
i. positionnement desdites graines ou de ladite pluralité de celles-ci dans une chambre de traitement ;
ii. évacuation du gaz de ladite chambre de traitement, ce qui réduit ainsi la pression dans ladite chambre de traitement jusqu'à une pression d'eau essentiellement saturée ;
iii. application d'une décharge électrique pour former un plasma gazeux dans ladite chambre de traitement ;
iv. trempage desdites graines ou de ladite pluralité de celles-ci dans une solution aqueuse de peroxyde d'hydrogène de sorte que les pores à l'intérieur du péricarpe soient remplis d'une solution aqueuse de peroxyde d'hydrogène, de préférence sans rompre la pression réduite, de préférence essentiellement sous les conditions de vide utilisées pendant le traitement au plasma ;
v. retrait desdites graines ou de la pluralité de celles-ci de la solution aqueuse de peroxyde d'hydrogène ;
vi. permission au peroxyde d'hydrogène d'interagir avec les spores à l'intérieur desdites graines ou de ladite pluralité de celles-ci ;
vii. ventilation de ladite chambre de traitement, ce qui augmente ainsi la pression à l'intérieur de la chambre de traitement, de préférence jusqu'à la pression ambiante.

5. Procédé selon l'une quelconque des revendications précédentes, dans lequel ladite température prédéterminée est comprise entre 5° C et 50° C, de préférence entre 10° C et 30° C, ledit procédé comprenant en outre les étapes suivantes :
i. fourniture d'une chambre de traitement, de préférence une chambre à vide, et positionnement desdites graines ou de ladite pluralité de celles-ci à l'intérieur de ladite chambre de traitement ;
ii. évacuation du gaz de ladite chambre de traitement, ce qui réduit ainsi la pression dans ladite chambre de traitement jusqu'à une pression d'eau approximativement saturée pour ladite température prédéterminée ;
iii. passage desdites graines ou de ladite pluralité de celles-ci à travers la chambre à vide de telle manière que lesdites graines ou ladite pluralité de celles-ci traversent d'abord un segment de la chambre à vide où un plasma gazeux est créé en continu, puis que lesdites graines ou ladite pluralité de celle-ci traversent le segment de la chambre à vide où un récipient contenant une solution aqueuse de peroxyde d'hydrogène est monté, lesdites graines ou ladite pluralité de celles-ci étant trempées dans ladite solution aqueuse de peroxyde d'hydrogène pendant une durée d'environ une seconde, laquelle étape est suivie soit par la mise au repos desdites graines ou de ladite pluralité de celles-ci dans le troisième segment de ladite chambre de traitement où se produit l'interaction du peroxyde d'hydrogène à l'intérieur des pores du péricarpe soit par la mise au repos desdites graines ou de ladite pluralité de celles-ci dans une chambre séparée à n'importe quelle pression.

6. Procédé selon l'une quelconque des revendications précédentes, dans lequel ladite pression dans ladite chambre de traitement est inférieure à 100 mbar.

7. Procédé selon l'une quelconque des revendications précédentes, dans lequel ladite pression dans ladite chambre de traitement est inférieure à 10 mbar.

8. Procédé selon l'une quelconque des revendications précédentes, dans lequel ledit plasma gazeux est créé au moyen d'une décharge électrique.

9. Procédé selon l'une quelconque des revendications précédentes, dans lequel ledit plasma gazeux contient en outre au moins un gaz en plus de la vapeur d'eau, ledit gaz étant choisi dans le groupe comprenant les gaz nobles, l'oxygène, l'azote, l'hydrogène, l'ammoniac et le dioxyde de carbone.

10. Procédé selon l'une quelconque des revendications précédentes, dans lequel la concentration de peroxyde d'hydrogène est d'environ 30 % (p/p).

11. Procédé selon l'une quelconque des revendications précédentes, dans lequel le temps de trempage est compris entre 0,1 et 100 s, de préférence entre 0,3 et 30 s, plus préférablement entre 1 et 3 s.

12. Procédé selon l'une quelconque des revendications précédentes, dans lequel les graines sont maintenues à une pression égale ou supérieure à la pression de vapeur saturée pendant plus de 1 s, de préférence plus de 10 s, le plus préférablement entre 100 et 300 s.

13. Procédé selon l'une quelconque des revendications précédentes, dans lequel la température des graines pendant les traitements ne change pas de plus de 50° C, de préférence pas plus de 5° C.

14. Procédé selon l'une quelconque des revendications précédentes, dans lequel lesdites graines ou ladite pluralité de celles-ci sont choisies dans le groupe contenant le blé, l'épeautre, le maïs, le sarrasin, l'orge et l'avoine.
